# EUROPEAN PATENT SPECIFICATION

(11) **EP 2 563 149 B1**
(45) Date of publication and mention of the grant of the patent: **31.08.2016**
(21) Application number: 11718686.6
(22) Date of filing: 21.04.2011
(51) Int. Cl.: A01P 7/00, A01P 21/00, A01N 43/56, A01N 43/82

(54) **A METHOD OF REDUCING INSECT-VECTORED VIRAL INFECTIONS**
VERFAHREN ZUR REDUZIERUNG VON INSEKTENVEKTORÜBERTRAGENEN VIRUSINFEKTIONEN
PROCÉDÉ POUR RÉDUIRE DES INFECTIONS VIRALES PROVOQUÉES PAR DES INSECTES VECTEURS

(30) Priority: 30.04.2010 EP 10161627
(43) Date of publication of application: 06.03.2013
(73) Proprietor: Syngenta Participations AG, 4058 Basel (CH)
(72) Inventor: PEDRONI, Domingos, 04795-900 Sao Paulo SP (BR); MONIR, Naglaa, 123.11 (EG); SENN, Robert, CH-4058 Basel (CH)
(74) Representative: Syngenta International AG
(86) International application number: PCT/EP2011/056390
(87) International publication number: WO 2011/134876

(56) References cited:
- WO-A1-2005/107468
- WO-A1-2006/068669
- WO-A1-2009/074236
- WO-A1-2010/025870
- WO-A1-2011/083709
- WO-A2-2008/034785
- WO-A2-2008/151781
- DD-A1- 100 135
- KATHARINA GOELLNER ET AL: "Priming: it's all the world to induced disease resistance", EUROPEAN JOURNAL OF PLANT PATHOLOGY, KLUWER ACADEMIC PUBLISHERS, DO, vol. 121, no. 3, 20 May 2008 (2008-05-20), pages 233-242, XP019603303, ISSN: 1573-8469
- Thomas M. Perring ET AL: "MANAGEMENT OF PLANT VIRAL DISEASES THROUGH CHEMICAL CONTROL OF INSECT VECTORS", Annual Review of Entomology, vol. 44, no. 1, 1 January 1999 (1999-01-01), pages 457-481, XP055089744, ISSN: 0066-4170, DOI: 10.1146/annurev.ento.44.1.457

## Description

The present invention is directed to methods of reducing insect-vectored viral infection and transmission in plants, methods of reducing damage to plants caused by viral infection, by application of a defined combination of an anthranilic bis-amide (ryanodine receptor modulator) insecticide and a plant activator, to compositions comprising the combinations and to plants and plant propagation material treated therewith.

The agrochemical industry is continually seeking methods of controlling plant pests and improving the growth of plants. Chemicals are typically used (i) to control undesirable species (for example, pests, such as insects, or vegetation, e.g., weeds, or fungi), and (ii) to promote plant growth (e.g., by providing nutrients), and thereby improve the growth of plants. Insect-vectored viral infections are a widespread cause of plant damage, for which there are few effective measures of control.

International patent application WO 2003/016284 and European patent application EP 1,717,237 refer to substituted anthranilamides for controlling invertebrate pests. International patent application WO 04/067528 refers to a series of cyanthranilamide insecticides. International patent application WO 2005/107468 refers to pesticidal compositions comprising anthranilamides in admixture with other agrochemicals. International patent application WO 2006/108552 refers to pesticidal compositions comprising bis-amide insecticides and fungicides for controlling pests, such as insects and acarids and also undesirable phytopathogenic fungi. United States patent application US 2009/0275471 refers to insecticidal compositions comprising anthranilamides in combination in combination with insecticides, fungicides and acaricides. International patent application WO 2008/020998 refers to the in-furrow fungicide application for reducing plant damage by control of insect-vectored viral infection. International patent applications WO 2008/021152 and WO 2008/122396 refer to the use of anthranilamides for increasing crop vigour and yield.

WO 2008/151781 discloses pesticidal combinations, including a combination comprising chlorantraniliprole and acebenzolar-S-methyl. Cyantraniliprole (3-bromo-1-(3-chloro-2-pyridyl)-4'-cyano-2'-methyl-6'-(methylcarbamoyl)pyrazole-5-carboxanilide), is an anthranilic bis-amide insecticide registered in, *inter alia,* the United States, for use on tree, vine and vegetable crops.

Acibenzolar-S-methyl (*S*-methyl benzo[1,2,3]thiadiazole-7-carbothioate), is a plant activator that is used for controlling fungi and bacteria.

There exists a need for alternative methods for controlling insect-vectored viral infection and transmission in plants, and for reducing the damage to plants caused by such viral infections, especially useful plants such as crops.

It has now been surprisingly found that a defined combination comprising an anthranilic bis-amide (ryanodine receptor modulator) insecticide, namely cyantraniliprole, and a plant activator, namely acibenzolar-S-methyl, is particularly effective in reducing viral infection and transmission in plants. The effect produced by the combination is greater than would be expected by the use of the individual components.

Accordingly, in one aspect, the present invention provides a method of reducing insect-vectored viral infection in a plant by application of a combination of cyantraniliprole (Ib), or an agrochemically acceptable salt thereof, 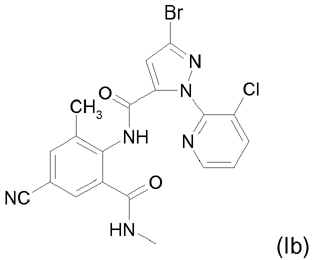 and acibenzolar-S-methyl, in a ratio of 10 to 40 parts cyantraniliprole (Ib) to 1 to 10 parts acibenzolar-S-methyl, by weight, together with an agrochemically acceptable diluent or carrier.

Agrochemically acceptable salts possess a cation, which is known and accepted in the art for the formation of salts for agricultural or horticultural use. Preferably, the salts are water-soluble. References to a compound of formula (Ib) herein shall be deemed to also include agrochemically acceptable salts thereof.

The active agents of the invention may be applied as sole ingredients, or alternatively, each agent may be in the form of an agrochemical composition comprising an agrochemically acceptable diluent or carrier. References herein to the active agents of the invention or components comprising said agents shall be deemed to include the agents as sole ingredients or agrochemical compositions thereof.

The active agents of the invention may be applied simultaneously, separately or sequentially. Each active agent may be applied directly as separate components or as a mixture of the two. References herein to a combination of a compound of formula (Ib) and a plant activator, acibenzolar-S-methyl, shall be deemed to include the active agents as separate individual ingredients or as a mixture of the two, or agrochemical compositions of said individual ingredients, or mixture thereof, comprising an agrochemically acceptable diluent or carrier.

In one embodiment, the present invention is directed to a composition comprising an a compound of formula (Ib), and acibenzolar-S-methyl, in a ratio of 10 to 40 parts cyantraniliprole (Ib) to 1 to 10 parts acibenzolar-S-methyl, by weight, together with an agrochemically acceptable diluent or carrier.

The combinations of the invention may be applied to the plant, plant propagation material or locus thereof, or any combination thereof. Accordingly, the present invention provides methods as described herein comprising the application of a combination of the invention to a plant, plant propagation material or locus thereof, or any combination thereof.

The term "Locus" means the fields on which the plants to be treated are growing, or where the seeds of cultivated plants are sown, or the place where the seed will be placed into the soil.

The plant, plant propagation material or locus thereof may be treated with a combination of the invention before the material is sown or planted. Alternatively, the plant, plant propagation material or locus thereof may be treated with a combination of the invention after the material is sown or planted. Additionally, the combination of the invention may be applied to the previously treated propagation material, either before its planting, and/or at its planting and/or during its growth.

Typically, the treatment of the soil with a combination of the invention, whether as a single composition or as individual components, can occur on several occasions during the growth of a plant up to the harvest (i.e. before its planting, and/or at its planting and/or during its growth). The treatment of a single composition and then the individual components in succession is also envisaged during the growth of a plant.

The combination of the invention may be applied to the locus of the plant on one or more occasions during the growth of the plant. It can be applied to the planting site before the seed is sown, during the sowing of the seed, pre-emergence and/or post-emergence. The combination can also be used while the plant is being grown in a green house and the use can be continued after transplantation. The soil may, for example, be treated directly, prior to transplanting, at transplanting or after transplanting.

The use of the combination of the invention can be *via* any suitable method, which ensures that the agents penetrate the soil, for example, nursery tray application, in furrow application, soil drenching, soil injection, drip irrigation, application through sprinklers or central pivot, incorporation into soil (broad cast or in band) are such methods.

The rate and frequency of use of the combination of the invention on the plant may vary within wide limits and depends on the type of use, the specific active agents, the nature of the soil, the method of application (pre- or post-emergence, *etc*.), the plant to be controlled, the prevailing climatic conditions, and other factors governed by the method of application, the time of application and the target plant.

In the event the components of the invention are applied individually, the time elapse between applications of the components to the locus of the plant should be such that on application of the second component the improved plant growth characteristics are demonstrated. The order of the application of the components is not critical. The second component is applied within preferably 14, such as 10, for example, 5, more preferably 4, especially 3, advantageously 1, days of the first component. Most preferably, the components are applied simultaneously or sequentially.

Typical rates of application are normally from 1g to 2kg of active ingredient (a.i.) per hectare (ha), preferably from 5g to 1kg a.i./ha, more preferably from 20g to 600g a.i./ha, yet more preferably from 50g to 200g a.i./ha. Most preferably, the rate of application of the compound of formula (lb) is 50g to 200g / ha, and the rate of application of plant activator is from 5g to 50g / ha.

When used as seed drenching agent, convenient rates of application are from 10mg to 1g of active substance per kg of seeds.

The present invention provides an agrochemical composition comprising a combination of cyantraniliprole and acibenzolar-S-methyl, in a ratio of 10 to 40 parts compound of cyantraniliprole to 1 to 10 parts acibenzolar-S-methyl, by weight, together with an agrochemically acceptable diluent or carrier.

The compound of formula (Ib), may be applied once or on several occasions in combination with acibenzolar-S-methyl during the growth of a plant depending on the plant and circumstances, for example, 1 to 6 or 1 to 4 occasions, and the amounts indicated above for a compound of formula (Ib), and acibenzolar-S-methyl are application rates are for each application.

The term "plant propagation material" is understood to denote all the generative parts of the plant, such as seeds, which can be used for the multiplication of the latter and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Further, the present invention is also applicable for use with a plant propagation material, e.g. plant seed that has already undergone a treatment with a pesticide.

Even distribution of the combination of the invention and adherence thereof to the seeds is desired during treatment of the propagation material, for example, a seed. The treatment could vary from a thin film of the formulation containing the combination of the invention on a plant propagation material, such as a seed, where the original size and/or shape are recognizable to a thick film (such as a coating or pelleting with many layers of different materials (such as carriers, for example, clays; different formulations, such as of active ingredients; polymers; and colourants) where the original shape and/or size of the seed is no longer recognisable.

Accordingly, in one embodiment the combination of the invention is adhered to the propagation material, such as a seed. In an alternative embodiment, the combination of the invention is present on the seed in a pellet form.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications).

The seed treatment occurs to an unsown seed, and the term "unsown seed" is meant to include seed at any period between the harvest of the seed and the sowing of the seed in the ground for the purpose of germination and growth of the plant. Treatment to an unsown seed is not meant to include those practices in which the pesticide is applied to the soil but would include any application practice that would target the seed during the sowing/planting process.

The treated plant propagation material of the present invention can be treated in the same manner as conventional plant propagation material. The treated propagation material can be stored, handled, sowed and tilled in the same manner as any other pesticide treated material, such as seeds. Preferably, the treatment occurs before sowing of the seed so that the seed being sown or planted has been pre-treated.

The combinations, compositions and methods of the present invention may be used for the treatment of any plant including, for example, cereals (wheat, barley, rye, oats, maize (including field corn, pop corn and sweet corn), rice, sorghum and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, eggplants, onions, pepper, tomatoes, potatoes, paprika, okra); plantation crops (bananas, fruit trees, rubber trees, tree nurseries), ornamentals (flowers, shrubs, broad-leaved trees and evergreens, such as conifers); as well as other plants such as vines, bushberries (such as blueberries), caneberries, cranberries, peppermint, rhubarb, spearmint, sugar cane and turf grasses including, for example, cool-season turf grasses (for example, bluegrasses (Poa L.), such as Kentucky bluegrass (Poa pratensis L.), rough bluegrass (Poa trivialis L.), Canada bluegrass (Poa compressa L.) and annual bluegrass (Poa annua L.); bentgrasses (Agrostis L.), such as creeping bentgrass (Agrostis palustris Huds.), colonial bentgrass (Agrostis tenius Sibth.), velvet bentgrass (Agrostis canina L.) and redtop (Agrostis alba L.); fescues (Festuca L.), such as tall fescue (Festuca arundinacea Schreb.), meadow fescue (Festuca elatior L.) and fine fescues such as creeping red fescue (Festuca rubra L.), chewings fescue (Festuca rubra var. commutata Gaud.), sheep fescue (Festuca ovina L.) and hard fescue (Festuca longifolia); and ryegrasses (Lolium L.), such as perennial ryegrass (Lolium perenne L.) and annual (Italian) ryegrass (Lolium multiflorum Lam.)) and warm-season turf grasses (for example, Bermudagrasses (Cynodon L. C. Rich), including hybrid and common Bermudagrass; Zoysiagrasses (Zoysia Willd.), St. Augustinegrass (Stenotaphrum secundatum (Walt.) Kuntze); and centipedegrass (Eremochloa ophiuroides (Munro.) Hack.)).

The combinations, compositions and methods of the present invention are particularly suitable for the treatment of crops, such as field crops, fruits, vegetables, nuts (particularly peanuts), berries, tropical plantations, ornamentals and others, such as wheat, barley, rye, oats, rice, maize, sorghum, beans, lentils, peas, soybeans, rape, mustard, poppy, sugar-and fodder- beet, cotton, flax, hemp, jute, sunflowers, castor oil, groundnuts, potatoes, tobacco, sugar cane, apples, pears, plums, peaches, nectarines, apricots, cherries, oranges, lemons, grapefruit, mandarins, olives vines, hops, almonds, walnuts, hazelnuts, avocado, bananas, tea, coffee, coconut, cocoa, natural rubber plants, oil plants, strawberries, raspberries, blackberries, spinach, lettuce, asparagus, cabbages, Chinese kale, carrots, onions, tomatoes, cucumbers, pepper, eggplants, melons, paprika, chilli, roses, chrysanthemums and carnations. The plants may also be genetically modified. The present invention may preferably be used in high pH (such as 7 to 8.5) soil types.

Suitable plants also include plants that have been rendered tolerant to herbicides like bromoxynil or classes of herbicides (such as HPPD inhibitors, ALS inhibitors; for example primisulfuron, prosulfuron and trifloxysulfuron, EPSPS (5-enol-pyrovyl-shikimate-3-phosphate-synthase) inhibitors, GS (glutamine synthetase) inhibitors or PPO (protoporphyrinogen-oxidase) inhibitors) as a result of conventional methods of breeding or genetic engineering. An example of a crop that has been rendered tolerant to imidazolinones (e.g. imazamox) by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady®, Herculex I® and LibertyLink®.

Suitable plants also include plants which have been so transformed by the use of recombinant DNA techniques that they are capable of synthesising one or more selectively acting toxins, such as are known from toxin-producing bacteria, especially those of the genus Bacillus.

Suitable plants also include plants which have been so transformed by the use of recombinant DNA techniques that they are capable of synthesising antipathogenic substances having a selective action, such as the so-called "pathogenesis-related proteins" (PRPs, see e.g. European patent application EP 0,392,225). Examples of such antipathogenic substances and transgenic plants capable of synthesising such antipathogenic substances are known, for example, from European patent applications EP 0,392,225 and EP 0,353,191 and International patent application WO 95/33818. The methods of producing such transgenic plants are generally known to the person skilled in the art and are described, for example, in the publications mentioned above.

The combinations, compositions and methods of the present invention as defined herein are particularly suitable for the treatment of tomato, tobacco, peanut and barley.

Accordingly, in a preferred embodiment, the present invention provides a method of reducing insect-vectored viral infection in a tomato, tobacco, peanut or barley plant by application of a combination of cyantraniliprole and acibenzolar-S-methyl.

In additional preferred embodiments, the present invention provides a combination of cyantraniliprole and acibenzolar-S-methyl, for use in the methods of the present invention, wherein the plant is a tomato, tobacco, peanut or barley plant.

In further additional preferred embodiments, the present invention provides for the use of a combination of cyantraniliprole and acibenzolar-S-methyl, in the methods of the present invention, wherein the plant is a tomato, tobacco, peanut or barley plant.

The present invention additionally provides a plant or plant propagation material treated with a combination of the invention as defined herein. In a preferred embodiment, the plant or plant propagation material is tomato, tobacco, peanut or barley. In a more preferred embodiment, the plant or plant propagation material is tomato, tobacco, peanut or barley, which has been treated with a defined combination of cyantraniliprole and acibenzolar-S-methyl.

The combinations, compositions and methods of the present invention are particularly suitable for the treatment of plants which are susceptible to damage by insect-vectored viral infections transmitted by whitefly, aphid, leafhopper or thrips, such as leaf curl virus, which may be transmitted by whitefly.

Accordingly, in a preferred embodiment, the present invention provides a method of reducing insect-vectored viral infection in a plant by application of a combination of cyantraniliprole and acibenzolar-S-methyl, wherein the plant is susceptible to damage by viral infections transmitted by whitefly, aphid, leafhopper or thrips.

In a further preferred embodiment, the present invention provides a method of reducing damage to a plant caused by one or more viral infections transmitted by whitefly, aphid, leafhopper or thrips, by application of a combination of cyantraniliprole and acibenzolar-S-methyl.

In additional preferred aspects, the present invention a combination of cyantraniliprole and acibenzolar-S-methyl, for use in the methods of the present invention, wherein the plant is susceptible to damage by viral infections transmitted by whitefly, aphid, leafhopper or thrips.

In further additional preferred aspects, the present invention provides for the use of a combination of cyantraniliprole and acibenzolar-S-methyl, in the methods of the present invention, wherein the plant is susceptible to damage by viral infections transmitted by whitefly, aphid, leafhopper or thrips.

In each and every aspect of the present invention, the combinations, compositions and methods of the present invention, as defined herein, are particularly suitable for the treatment of tomato, tobacco, peanut and barley, in order to protect them from damage by insect-vectored viral infections transmitted by whitefly, aphid, leafhopper or thrips.

Accordingly, the most preferred embodiments of each aspect of the present invention are as defined below.

A method of reducing insect-vectored viral infection in a tomato, tobacco, peanut or barley plant by application of a combination of cyantraniliprole and acibenzolar-S-methyl, wherein the plant is susceptible to damage by insect-vectored viral infections transmitted by whitefly, aphid, leafhopper or thrips.

The use of a combination of cyantraniliprole and acibenzolar-S-methyl, in the methods of the present invention, wherein the plant is a tomato, tobacco, peanut or barley plant, which is susceptible to damage by insect-vectored viral infections transmitted by whitefly, aphid, leafhopper or thrips.

Normally, a grower in the management of his crop would use one or more other agronomic chemicals in addition to the combination of the present invention. Examples of agronomic chemicals include herbicides, pesticides, such as fungicides, herbicides, insecticides, bactericides, acaricides, nematicides, plant nutrients and plant fertilizers.

Accordingly, the present invention provides for the use of a combination or composition according to the present invention together with one or more herbicides, pesticides, plant nutrients or plant fertilizers.

Suitable examples of plant nutrients or plant fertilizers are calcium sulfate CaSO₄, calcium nitrate Ca(NO₃)₂.4H₂O, calcium carbonate CaCO₃, potassium nitrate KNO₃, magnesium sulfate MgSO₄, potassium hydrogen phosphate KH₂PO₄, manganese sulfate MnSO₄, copper sulfate CuSO₄, zinc sulfate ZnSO₄, nickel chloride NiCl₂, cobalt sulfate CoSO₄, potassium hydroxide KOH, sodium chloride NaCl, boric acid H₃BO₃ and metal salts thereof, Na₂MoO₄. The nutrients may be present in an amount of 5% to 50% by weight, preferably of 10% to 25% by weight or of 15% to 20% by weight each. Preferred additional nutrients are urea, melamine, potassium oxide, and inorganic nitrates. The most preferred additional plant nutrient is potassium oxide. Where the preferred additional nutrient is urea, it is present in an amount of generally 1% to 20% by weight, preferably 2% to 10% by weight or of 3% to 7% by weight.

Examples of herbicides include glyphosate, glufosinate, glyfosinate, imidazilinone, and STS system (sulfonylurea).

Examples of pesticides include spinosad, avermectin, such as the natural avermectins, A1a, A1b, A2a, A2b, B1a, B1b, B2a and B2b, which can be obtained from Streptomyces avermitilis, and avermectin monosaccharide derivatives, such as abamectin, doramectin, emamectin, eprinomectin, ivermectin and selamectin, and milbemycin derivatives, such as milbemectin, milbemycin oxime, moxidectin and SI0009.

Examples of nematicides are abamectin, carbamate nematicides (e.g. aldicarb, carbofuran, carbosulfan, oxamyl, aldoxycarb, ethoprop benomyl, alanycarb), organophosphorus nematicides (e.g. phenamiphos, fenamiphos, fensulfothion, terbufos, fosthiazate, phosphocarb, dichlofenthion, isamidofos, fosthietan, isazofos, ethoprophos, cadusafos, chlorpyrifos, heterophos, isamidofos, mecarphon, phorate, thionazin, triazophos, diamidafos, phosphamidon), methyl bromide, methyl iodide, carbon disulfide, 1,3-dichloropropene, chloropicrin, cytokinins, dazomet, DCIP, ethylene dibromide, GY-81, metam, methyl isocyanate, myrothecium verrucaria composition, flupyrazofos, benchlothiaz, [2-cyanoimino-3-ethylimidazolidin-1-yl]phosphonothioic acid O-ethyl S-propyl ester, and bacillus firmus.

Further suitable examples of pesticides that can be used include acephate, acetamiprid, acetoprole, aldicarb, alpha-cypermethrin, azinphos-methyl, azoxystrobin, benalaxyl, benalaxyl-M, benclothiaz, bendicoarb, benfuracarb, benomyl, bensultap, bifenthrin, bitertanol, boscalid, captan, carbendazim, carbaryl, carbofuran, carbosulfan, carboxin, carbpropamid, chlorothalonil, chlorpyrifos, chlorpyrifos-methyl, clothianidin, copper salts (such as copper sulfate, cuprous oxide, Bordeaux mixture, copper hydroxide, copper sulfate (tribasic), copper oxychloride and copper octanoate), cymoxanil, cypermethrin, cyproconazole, cyprodinil, cyromazine, dazomet, deltamethrin, diazinon, difenoconazole, dimethoate, dimoxystrobin, diniconazole, dinotefuran, Emamectin, endosulfan, ethaboxam, ethirimol, ethiprole, ethoprophos, famoxadone, fenamidone, fenamiphos, fenhexamid, fenpiclonil, fipronil, flonicamid, fluoxastrobin, fluazinam, fludioxonil, fluquinconazole, flutolanil, flutriafol, fonophos, fosetyl-aluminium, fuberidazole, furathiocarb, gamma-cyhalothrin, gamma-HCH, guazatine, heptenophos, hexaconazole, hymexazol, imazalil, imidacloprid, ipconazole, iprodione, isofenphos, lambda-cyhalothrin, mancozeb, maneb, metalaxyl, metalaxyl-M, metconazole, methiocarb, methyl-bromide, methyl-iodide, myclobutanil, nuarimol, omethoate, oxamyl, oxadixyl, oxine-copper, oxolinic acid, pencycuron, pefurazoate, phosmet, picoxystrobin, pirimicarb, prochloraz, procymidone, propamocarb, propiconazole, prothioconazole, pymetrozine, pyraclostrobin, pyrimethanil, pyroquilon, quintozene, silthiofam, spinosad, tebuconazole, tefluthrin, tetraconazole, thiabendazole, thiacloprid, thiamethoxam, thiodicarb, thiophanate-methyl, thiram, tolylfluanid, triadimenol, triazamate, triazophos, triazoxide, triticonazole, trifloxystrobin, 3-Iodo-N*2*-(2-methanesulfonyl-1,1-dimethyl-ethyl)-N*1*-[2-methyl-4-(1,2,2,2-tetrafluoro-1-trifluoromethyl-ethyl)-phenyl]-phthalamide (code NNI-0001), and a compound of 2-Pyridin-2-yl-2H-pyrazole-3-carboxylic acid (2-methylcarbamoyl-phenyl)-amide (code DKI-0001), such as 2-(3-Chloro-pyridin-2-yl)-5-trifluoromethyl-2H-pyrazole-3-carboxylic acid (4-chloro-2-isopropylcarbamoyl-6-methyl-phenyl)-amide, 2-(3-Chloro-pyridin-2-yl)-5-trifluoromethyl-2H-pyrazole-3-carboxylic acid (4-chloro-2-methyl-6-methylcarbamoyl-phenyl)-amide, 5-bromo-2-(3-chloro-pyridin-2-yl)-2H-pyrazole-3-carboxylic acid (4-chloro-2-isopropyl-carbamoyl-6-methyl-phenyl)-amide, 5-Bromo-2-(3-chloro-pyridin-2-yl)-2H-pyrazole-3-carboxylic acid (4-chloro-2-methyl-6-methylcarbamoyl-phenyl)-amide, and 3-Difluoromethyl-1-methyl-1 Hpyrazole-4-carboxylic acid (2-bicyclopropyl-2-yl-phenyl)-amide.

The combination of a compound of formula (Ib), and acibenzolar-S-methyl has been found to be particularly effective in reducing the damage to plants caused by whitefly, aphid, leafhopper and thrips and the viral infections transmitted thereby. The action of the compound of formula (Ib), together with acibenzolar-S-methyl goes far beyond their action individually. A synergistic effect exists whenever the action of, for example, the active ingredient combination of the compounds is greater than the sum of the actions of the active ingredients applied separately. This can be calculated, for example, by the Colby formula, as described in COLBY, S.R., "Calculating synergistic and antagonistic response of herbicide combinations", Weeds 15, pages 20-22, 1967.

In the treatments or applications of the invention the components of the invention are generally in the form of a formulation containing other customary formulation adjuvants because it allows, for example, less burdensome handling and application.

A variety of formulation types exist: dry flowables (DF), liquid flowables (LF), true liquids (TL), emulsifiable concentrates (EC), suspension concentrates (SC), dusts (D), wettable powders (WP), suspoemulsions (SE), water-dispersible granules (WG) and others, such as encapsulations in polymeric substances. Some are registered for use only by commercial applicators using closed application systems; others are readily available for on-farm use as dusts, slurries, water-soluble bags, or liquid ready-to-apply formulations. Normally however, commercial products are usually formulated as concentrates, where the end user will normally employ dilute formulations. How the components of the invention are to be used will also determine the formulation type, for example, if they are to be used as a seed treatment, then an aqueous composition is preferred.

The compound of formula (Ib), andacibenzolar-S-methyl can be part of a single composition and used simultaneously (i.e. they are mixed together - often referred to as "a pre-mix"), or can be separate products and used separately or sequentially. In the event they are separate products, they can be mixed together shortly before use by the user.

It is often more practical, where possible, for commercially available formulations of the compound of formula (Ib), and acibenzolar-S-methyl to be brought together in the desired mixing ratio in a container (often referred to as a "tank mixture") in water shortly before application.

In an embodiment, the compound of formula (Ib), and acibenzolar-S-methyl are used in single composition that has been specifically formulated, the composition comprising at least one of the adjuvants customary in formulation technology, such as extenders, e.g., solvents or solid carriers, or surface-active compounds (surfactants).

Suitable formulation adjuvants are, for example, solid carriers, solvents, stabilisers, slow-release adjuvants, dyes and optionally surface-active substances (surfactants). Suitable carriers and adjuvants in this case include all substances customarily used in crop protection products, especially in products for controlling snails and slugs. Suitable adjuvants, such as solvents, solid carriers, surface-active compounds, non-ionic surfactants, cationic surfactants, anionic surfactants and further adjuvants in the compositions used in accordance with the invention are, for example, the same as those described in EP 0,736,252.

The compositions may comprise from 0.1 to 99%, in particular 0.1 to 95%, of the combination and from 1 to 99.9 %, in particular 5 to 99.9 %, of at least one solid or liquid auxiliary. The composition may additionally comprise from 0 to 25 %, in particular 0.1 to 20 %, of surfactants (% is in each case per cent by weight). While concentrated compositions are more preferred as commercial goods, the end user generally uses dilute compositions that comprise considerably lower concentrations of the combination.

Preferred compositions are composed, in particular, as follows (% = per cent by weight):

### Emulsifiable concentrates:

| | |
|---|---|
| combination: | 1 to 90%, preferably 5 to 20% |
| surfactant: | 1 to 30%, preferably 10 to 20% |
| solvent: | balance |

### Dusts:

| | |
|---|---|
| combination: | 0.1 to 10%, preferably 0.1 to 1% |
| solid carrier: | 99.9 to 90%, preferably 99.9 to 99% |

### Suspension concentrates:

| | |
|---|---|
| combination: | 5 to 60%, preferably 10 to 40% |
| surfactant: | 1 to 40%, preferably 2 to 30% |
| water: | balance |

### Wettable powders:

| | |
|---|---|
| combination: | 0.5 to 90%, preferably 1 to 80% |
| surfactant: | 0.5 to 20%, preferably 1 to 15% |
| solid carrier: | balance |

### Granules:

| | |
|---|---|
| combination: | 0.5 to 60%, preferably 3 to 40% |
| solid carrier: | 99.5 to 70%, preferably 97 to 85% |

The compositions may also comprise further solid or liquid adjuvants, such as stabilisers, e.g., vegetable oils or epoxidised vegetable oils (e.g., epoxidised coconut oil, rapeseed oil or soybean oil), antifoams, e.g., silicone oil, preservatives, viscosity regulators, binders and/or tackifiers.

The following Examples are given by way of illustration and not by way of limitation of the invention.

### Examples

Trial results of cyantraniliprole/azibenzolar applications to control tomato yellow leaf curl virus (TYLC) in tomatoes.

### 1. Foliar use Method:

Two studies were carried out in Elhasanya, Egypt in 2009 on tomato plants of the variety Fayrouz with the main goal to measure efficacy on the whitefly Bemisia tabaci. The plot size was 4.8 m² and 6 replicates were used in the trial. Products were applied 3 times on young tomato plants at BBCH stages 14, 17 and 51 at spray intervals between 12 and 19 days. The spray volume was at the first application 350 l/ha and later 500 l/ha. The evaluation of this study was done counting the adult whiteflies (Bemisia tabaci) as well as the nymphs and the eggs in each plot. In addition to the direct whitefly effect, visual symptoms of the virus, mainly TYLCV (tomato yellow leaf curl virus) were evaluated also.
ASM = Acibenzolar-S-methyl. WG 50 = Actigard® 50WG, a water-dispersible granule with the active ingredient ASM
CYNT = Cyantraniliprole. WG 40 = Cyazypyr®, a water dispersable granule with the active ingredient CYNT.

**Results on whitefly adults. Trial 1**

| | | | **% Efficacy on Adults** | | | | | | | | |
|---|---|---|---|---|---|---|---|---|---|---|---|
| Product | Form. | g ai/hl | | | | | | | | | |
| | | | 5D AA1 | 10D AA1 | 5D AA2 | 10D AA2 | 5D AA3 | 10D AA3 | 15D AA3 | 20D AA3 | Avg %C |
| ASM | WG 50 | 12.5 | 53 | 43 | 45 | 37 | 55 | 46 | 38 | 12 | 41 |
| ASM | WG 50 | 25 | 59 | 43 | 52 | 39 | 57 | 49 | 40 | 22 | 45 |
| CYNT | WG 40 | 75 | 82 | 49 | 69 | 67 | 83 | 79 | 71 | 62 | 70 |
| CYNT | | 100 | 89 | 74 | 89 | 86 | 90 | 86 | 80 | 68 | 83 |
| CYNT + ASM | WG 40 + WG 50 | 75 + 12.5 | 54 | 33 | 78 | 74 | 88 | 83 | 77 | 67 | 69 |
| CYNT + ASM | | 100 + 12.5 | 82 | 69 | 92 | 89 | 94 | 90 | 84 | 70 | 84 |
| CYNT + ASM | WG 40 + WG 50 | 75 + 25 | 47 | 33 | 89 | 86 | 95 | 90 | 85 | 74 | 75 |
| CYNT + ASM | | 100 + 25 | 81 | 64 | 93 | 93 | 97 | 93 | 91 | 83 | 87 |
| Spirom esifen | SC 240 | 150 | 61 | 43 | 71 | 69 | 81 | 76 | 67 | 54 | 65 |

**Number of adults in untreated check (from 60 random leaves per treatment ):**

| 5DAA1 | 10DAA1 | 5DAA2 | 10DAA2 | 5DAA3 | 10DAA3 | 15DAA3 | 20DAA3 |
|---|---|---|---|---|---|---|---|
| 249 | 270 | 540 | 895 | 1171 | 1200 | 950 | 410 |

**Results on whitefly adults. Trial 2**

| | | | **% Efficacy on Adults** | | | | | | | |
|---|---|---|---|---|---|---|---|---|---|---|
| Product | Form. | g ai/hl | | | | | | | | |
| | | | 5D AA1 | 10D AA1 | 5D AA2 | 10D AA2 | 5D AA3 | 10D AA3 | 15D AA3 | 20D AA3 |
| ASM | WG 50 | 12.5 | 53 | 43 | 45 | 37 | 55 | 46 | 38 | 12 |
| ASM | WG 50 | 25 | 59 | 43 | 52 | 39 | 57 | 49 | 40 | 22 |
| CYNT | WG 40 | 75 | 82 | 49 | 69 | 67 | 83 | 79 | 71 | 62 |
| CYNT | | 100 | 89 | 74 | 89 | 86 | 90 | 86 | 80 | 68 |
| CYNT + ASM | WG 40 + WG 50 | 75 + 12.5 | 54 | 33 | 78 | 74 | 88 | 83 | 77 | 67 |
| CYNT + ASM | | 100 + 12.5 | 82 | 69 | 92 | 89 | 94 | 90 | 84 | 70 |
| CYNT + ASM | WG 40 + WG 50 | 75 + 25 | 47 | 33 | 89 | 86 | 95 | 90 | 85 | 74 |
| CYNT + ASM | | 100 + 25 | 81 | 64 | 93 | 93 | 97 | 93 | 91 | 83 |
| Spiromesifen | SC 240 | 150 | 61 | 43 | 71 | 69 | 81 | 76 | 67 | 54 |

**Number of adults in untreated check (from 60 random leaves per treatment ):**

| 5DAA1 | 10DAA1 | 5DAA2 | 10DAA2 | 5DAA3 | 10DAA3 | 15DAA3 | 20DAA3 |
|---|---|---|---|---|---|---|---|
| 249 | 270 | 540 | 895 | 1171 | 1200 | 950 | 410 |

**Results on whitefly nymphs. Trial 1**

| | | | **% Efficacy on Nymphs** | | | | | | |
|---|---|---|---|---|---|---|---|---|---|
| Product | Form. | g ai/hl | | | | | | | |
| | | | 5D AA2 | 10D AA2 | 5D AA3 | 10D AA3 | 15D AA3 | 20D AA3 | Avg %C |
| ASM | WG 50 | 12.5 | 5 | 52 | 62 | 46 | 42 | 27 | 39 |
| ASM | WG 50 | 25 | 57 | 65 | 66 | 53 | 55 | 39 | 56 |
| CYNT | WG 40 | 75 | 27 | 48 | 72 | 65 | 60 | 48 | 53 |
| CYNT | WG 40 | 100 | 73 | 73 | 84 | 78 | 68 | 56 | 72 |
| CYNT + ASM | WG 40 + WG 50 | 75 + 12.5 | 41 | 51 | 83 | 72 | 65 | 50 | 60 |
| CYNT + ASM | WG 40 + WG 50 | 100 + 12.5 | 75 | 75 | 86 | 81 | 73 | 65 | 76 |
| CYNT + ASM | WG 40 + WG 50 | 75 + 25 | 36 | 57 | 93 | 81 | 75 | 69 | 69 |
| CYNT + ASM | WG 40 + WG 50 | 100 + 25 | 66 | 67 | 94 | 87 | 81 | 76 | 78 |
| Spiromesifen | SC 240 | 150 | 86 | 85 | 88 | 84 | 81 | 76 | 83 |

**Number of nymphs in untreated check (from 60 random leaves per treatment):**

| 5DAA2 | 10DAA2 | 5DAA3 | 10DAA3 | 15DAA3 | 20DAA3 |
|---|---|---|---|---|---|
| 1044 | 750 | 482 | 620 | 718 | 615 |

**Results on whitefly nymphs. Trial 2**

| | | | **% Efficacy on Nymphs** | | | | | |
|---|---|---|---|---|---|---|---|---|
| Product | Form. | g ai/hl | | | | | | |
| | | | 5D AA2 | 10D AA2 | 5D AA3 | 10D AA3 | 15D AA3 | 20 DAA3 |
| ASM | WG 50 | 12.5 | 5 | 52 | 62 | 46 | 42 | 27 |
| ASM | WG 50 | 25 | 57 | 65 | 66 | 53 | 55 | 39 |
| CYNT CYNT | WG 40 | 75 100 | 27 73 | 48 73 | 72 84 | 65 78 | 60 68 | 48 56 |
| CYNT + ASM | WG 40 + WG 50 | 75 + 12.5 | 41 | 51 | 83 | 72 | 65 | 50 |
| CYNT + ASM | | 100 + 12.5 | 75 | 75 | 86 | 81 | 73 | 65 |
| CYNT + ASM | WG 40 + WG 50 | 75 + 25 | 36 | 57 | 93 | 81 | 75 | 69 |
| CYNT + ASM | | 100 + 25 | 66 | 67 | 94 | 87 | 81 | 76 |
| Spiromesifen | SC 240 | 150 | 86 | 85 | 88 | 84 | 81 | 76 |

**Number of nymphs in untreated check (from 60 random leaves per treatment):**

| 5DAA2 | 10DAA2 | 5DAA3 | 10DAA3 | 15DAA3 | 20DAA3 |
|---|---|---|---|---|---|
| 1044 | 750 | 482 | 620 | 718 | 615 |

**Evaluation of percentage of infected leaf area by TYLC virus (average of 45 plants evaluated per treatment) Trial 1**

| | | | **% Infected Surface area with virus / plant,** | | | | | |
|---|---|---|---|---|---|---|---|---|
| | | | **produced from 45 plants / treatment** | | | | | |
| Product | Form. | Rate | | | | | | |
| | | g ai/hl | 14.10 | 24.10 | 29.10 | 3.11 | 8.11 | 12.11 |
| | | | 5DAA2 | 5DAA3 | 10DAA3 | 15DAA3 | 20DAA3 | 24DAA3 |
| Check | | | 0.9 | 2.5 | 15.1 | 17.0 | 19.4 | 23.8 |
| ASM | WG 50 | 12.5 | 0.0 | 1.0 | 9.6 | 9.9 | 10.7 | 14.4 |
| ASM | WG 50 | 25 | 0.0 | 0.0 | 3.3 | 4.7 | 5.0 | 7.2 |
| CYNT | WG 40 | 75 | 0.0 | 3.0 | 5.1 | 7.1 | 9.8 | 10.3 |
| CYNT | WG 40 | 100 | 0.8 | 1.9 | 3.1 | 3.9 | 4.5 | 5.3 |
| CYNT + ASM | WG 40 + WG 50 | 75 + 12.5 | 0.0 | 1.2 | 3.3 | 4.3 | 4.7 | 4.6 |
| CYNT + ASM | WG 40 + WG 50 | 100 + 12.5 | 0.0 | 1.3 | 1.3 | 2.2 | 2.3 | 2.8 |
| CYNT + ASM | WG 40 + WG 50 | 75 + 25 | 0.0 | 1.8 | 2.3 | 3.6 | 3.8 | 4.1 |
| CYNT + ASM | WG 40 + WG 50 | 100 + 25 | 0.0 | 0.6 | 1.3 | 2.1 | 2.3 | 2.2 |
| Spiromesifen | SC 240 | 150 | 1.1 | 0.8 | 7.1 | 8.8 | 11.1 | 11.5 |

**Evaluation of percentage of infected leaf area by TYLC virus (average of 45 plants evaluated per treatment). Trial 2**

| | | | **% Infected Surface area with virus / plant,** | | | | | |
|---|---|---|---|---|---|---|---|---|
| | | | **produced from 45 plants / treatment** | | | | | |
| Product | Form. | Rate | | | | | | |
| | | g ai/hl | 14.10 | 24.10 | 29.10 | 3.11 | 8.11 | 12.11 |
| | | | 5DAA2 | 5DAA3 | 10DAA3 | 15DAA3 | 20DAA3 | 24DAA3 |
| Check | | | 0.9 | 2.5 | 15.1 | 17.0 | 19.4 | 23.8 |
| ASM | WG 50 | 12.5 | 0.0 | 1.0 | 9.6 | 9.9 | 10.7 | 14.4 |
| ASM | WG 50 | 25 | 0.0 | 0.0 | 3.3 | 4.7 | 5.0 | 7.2 |
| CYNT | WG 40 | 75 | 0.0 | 3.0 | 5.1 | 7.1 | 9.8 | 10.3 |
| CYNT | WG 40 | 100 | 0.8 | 1.9 | 3.1 | 3.9 | 4.5 | 5.3 |
| CYNT + ASM | WG 40 + WG 50 | 75 + 12.5 | 0.0 | 1.2 | 3.3 | 4.3 | 4.7 | 4.6 |
| CYNT + ASM | WG 40 + WG 50 | 100 + 12.5 | 0.0 | 1.3 | 1.3 | 2.2 | 2.3 | 2.8 |
| CYNT + ASM | WG 40 + WG 50 | 75 + 25 | 0.0 | 1.8 | 2.3 | 3.6 | 3.8 | 4.1 |
| CYNT + ASM | WG 40 + WG 50 | 100 + 25 | 0.0 | 0.6 | 1.3 | 2.1 | 2.3 | 2.2 |
| Spiromesifen | SC 240 | 150 | 1.1 | 0.8 | 7.1 | 8.8 | 11.1 | 11.5 |

### Trial results of cyantraniliprole/azibenzolar applications

### 2. Soil use Method:

Two soil applied studies were carried out in Elhasanya, Egypt in 2009 on tomato plants with the main goal to measure efficacy on the whitefly Bemisia tabaci. The plot size was 4.8 m² and 6 replicates were used in the trial. Products were applied once on young tomato plants at BBCH stage 14 as a drench. The spray volume was at the first application 350 l/ha. The evaluation of this study was done counting the adult whiteflies (Bemisia tabaci) as well as the nymphs and the eggs in each plot. In addition to the direct whitefly effect, visual symptoms of the virus, mainly TYLCV (tomato yellow leaf curl virus) were evaluated also.

**Results on whitefly adults. Trial 1**

| | | | **% Efficacy on Adults** | | | | | | | |
|---|---|---|---|---|---|---|---|---|---|---|
| Product | Form. | g ai/ha | | | | | | | | |
| | | | 5DAA | 10DAA | 15DAA | 20DAA | 25DAA | 30DAA | 35DAA | 40DAA |
| ASM | WG 50 | 12.5 | 40 | 41 | 58 | 39 | 29 | 22 | 14 | 5 |
| ASM | WG 50 | 25 | 50 | 44 | 64 | 42 | 31 | 26 | 26 | 5 |
| CYNT | WG 40 | 100 | 79 | 75 | 78 | 72 | 66 | 61 | 53 | 39 |
| CYNT | WG 40 | 150 | 83 | 75 | 79 | 74 | 69 | 67 | 59 | 45 |
| CYNT + ASM | WG 40 + WG 50 | 100 + 12.5 | 84 | 71 | 74 | 74 | 69 | 63 | 51 | 44 |
| CYNT + ASM | WG 40 + WG 50 | 150 + 12.5 | 94 | 89 | 90 | 87 | 83 | 79 | 73 | 59 |
| CYNT + ASM | WG 40 + WG 50 | 100 + 25 | 92 | 84 | 85 | 83 | 79 | 71 | 63 | 50 |
| CYNT + ASM | WG 40 + WG 50 | 150 + 25 | 94 | 90 | 92 | 90 | 89 | 83 | 78 | 64 |

**Number of adults in untreated check ( from 60 random leaves per treatment ):**

| 5DAA | 10DAA | 15DAA | 20DAA | 25DAA | 30DAA | 35DAA | 40DAA |
|---|---|---|---|---|---|---|---|
| 218 | 255 | 332 | 516 | 991 | 1103 | 822 | 368 |

**Results on whitefly adults. Trial 2**

| | | | **% Efficacy on Adults** | | | | | | | |
|---|---|---|---|---|---|---|---|---|---|---|
| Product | FORM. | g ai/ha | | | | | | | | |
| | | | 5DAA | 10DAA | 15DAA | 20DAA | 25DAA | 30DAA | 35DAA | 40DAA |
| ASM | WG 50 | 12.5 | 29 | 34 | 35 | 31 | 25 | 19 | 12 | 9 |
| ASM | WG 50 | 25 | 36 | 45 | 45 | 43 | 35 | 30 | 23 | 10 |
| CYNT | WG 40 | 100 | 70 | 71 | 76 | 74 | 72 | 65 | 57 | 43 |
| CYNT | WG 40 | 150 | 76 | 80 | 83 | 82 | 80 | 71 | 62 | 45 |
| CYNT + ASM | WG 40 + WG 50 | 100 + 12.5 | 77 | 74 | 79 | 79 | 75 | 66 | 58 | 46 |
| CYNT + ASM | WG 40 + WG 50 | 150 + 12.5 | 79 | 83 | 84 | 84 | 83 | 78 | 71 | 57 |
| CYNT + ASM | WG 40 + WG 50 | 100 + 25 | 81 | 84 | 83 | 80 | 78 | 73 | 66 | 57 |
| CYNT + ASM | WG 40 + WG 50 | 150 + 25 | 84 | 86 | 86 | 87 | 84 | 79 | 77 | 60 |

**Number of adults in untreated check (from 60 random leaves per treatment):**

| 5DAA | 10DAA | 15DAA | 20DAA | 25DAA | 30DAA | 35DAA | 40DAA |
|---|---|---|---|---|---|---|---|
| 418 | 580 | 657 | 680 | 710 | 776 | 828 | 869 |

**Results on whitefly nymphs. Trial 1**

| | | | **% Efficacy on Nymphs** | | | | | | |
|---|---|---|---|---|---|---|---|---|---|
| Product | Form. | g ai/ha | | | | | | | |
| | | | 10DAA | 15DAA | 20DAA | 25DAA | 30DAA | 35DAA | 40DAA |
| ASM | WG 50 | 12.5 | 47 | 21 | 31 | 60 | 47 | 41 | 28 |
| ASM | WG 50 | 25 | 50 | 47 | 54 | 50 | 49 | 44 | 33 |
| CYNT | WG 40 | 100 | 67 | 65 | 59 | 39 | 28 | 24 | 13 |
| CYNT | WG 40 | 150 | 69 | 84 | 84 | 77 | 74 | 70 | 64 |
| CYNT + ASM | WG 40 + WG 50 | 100 + 12.5 | 75 | 69 | 59 | 44 | 47 | 37 | 26 |
| CYNT + ASM | WG 40 + WG 50 | 150 + 12.5 | 72 | 90 | 86 | 83 | 80 | 78 | 73 |
| CYNT + ASM | WG 40 + WG 50 | 100 + 25 | 78 | 68 | 64 | 61 | 56 | 48 | 39 |
| CYNT + ASM | WG 40 + WG 50 | 15 + 25 | 82 | 92 | 90 | 87 | 83 | 80 | 76 |

**Number of nymphs in untreated check (from 60 random leaves per treatment):**

| 10DAA | 15DAA | 20DAA | 25DAA | 30DAA | 35DAA | 40DAA |
|---|---|---|---|---|---|---|
| 1950 | 982 | 711 | 327 | 605 | 650 | 526 |

**Results on whitefly nymphs. Trial 2**

| | | | **% Efficacy on Nymphs** | | |
|---|---|---|---|---|---|
| Product | Form. | g ai/ha | | | |
| | | | 25DAA1 | 30DAA1 35DAA1 | 40DAA2 |
| ASM | WG 50 | 12.5 | 29 | 39 22 | 11 |
| ASM | WG 50 | 25 | 69 | 43 14 | 6 |
| CYNT | WG 40 | 100 | 60 | 34 63 | 52 |
| CYNT | WG 40 | 150 | 78 | 79 77 | 61 |
| CYNT + ASM | WG 40 + WG 50 | 100 + 12.5 | 75 | 78 60 | 57 |
| CYNT + ASM | WG 40 + WG 50 | 150 + 12.5 | 77 | 80 73 | 63 |
| CYNT + ASM | WG 40 + WG 50 | 100 + 25 | 69 | 76 58 | 54 |
| CYNT + ASM | WG 40 + WG 50 | 150 + 25 | 83 | 91 72 | 65 |

**Number of nymphs in untreated check (from 60 random leaves per treatment):**

| 25DAA1 | 30DAA1 | 35DAA | 40DAA |
|---|---|---|---|
| 377 | 453 | 213 | 224 |

**Evaluation of percentage of infected leaf area by TYLC virus (average of 45 plants evaluated per treatment). Trial 1**

| | | | **% Infected Surface area with virus / plant,** | | | | | |
|---|---|---|---|---|---|---|---|---|
| | | | **produced from 45 plants / treatment** | | | | | |
| Product | Form. | Rate | | | | | | |
| | | g ai/hl | 14.10 | 24.10 | 29.10 | 3.11 | 8.11 | 12.11 |
| | | | 15DAA | 25DAA | 30DAA | 35DAA | 40DAA | 44DAA |
| Check | | | 1.4 | 1.7 | 8.4 | 13.4 | 15.8 | 22.2 |
| ASM | WG 50 | 12.5 | 0.0 | 1.1 | 5.7 | 5.7 | 7.4 | 16.7 |
| ASM | WG 50 | 25 | 0.0 | 1.3 | 3.3 | 3.3 | 5.5 | 11.4 |
| CYNT | WG 40 | 100 | 1.1 | 1.3 | 4.3 | 5.9 | 7.4 | 19.9 |
| CYNT | WG 40 | 150 | 0.0 | 0.0 | 3.0 | 3.3 | 3.8 | 14.9 |
| CYNT + ASM | WG 40 + WG 50 | 100 + 12.5 | 0.0 | 1.8 | 2.2 | 2.2 | 3.1 | 10.2 |
| CYNT + ASM | WG 40 + WG 50 | 150 + 12.5 | 0.0 | 0.0 | 1.3 | 1.3 | 1.7 | 4.9 |
| CYNT + ASM | WG 40 + WG 50 | 100 + 25 | 1.1 | 1.6 | 1.7 | 1.7 | 1.7 | 2.5 |
| CYNT + ASM | WG 40 + WG 50 | 150 + 25 | 0.0 | 0.0 | 0.0 | 1.3 | 1.3 | 2.3 |

**Evaluation of percentage of infected leaf area by TYLC virus (average of 45 plants evaluated per treatment). Trial 2**

| | | | **% Infected Surface area with virus / plant,** | | | | |
|---|---|---|---|---|---|---|---|
| | | | **produced from 45 plants / treatment** | | | | |
| Product | Form. | Rate | | | | | |
| | | g ai/hl | 19.11 | 24.11 | 29.11 | 4.12 | 9.12 |
| | | | 30DAA | 35DAA | 40DAA | 45DAA | 50DAA |
| Check | | | 7.2 | 12.3 | 13.9 | 19.2 | 23.1 |
| ASM | WG 50 | 12.5 | 4.0 | 5.2 | 6.7 | 11.1 | 14.0 |
| ASM | WG 50 | 25 | 2.4 | 3.1 | 4.2 | 7.5 | 12.4 |
| CYNT | WG 40 | 100 | 3.8 | 5.2 | 6.5 | 12.9 | 15.5 |
| CYNT | WG 40 | 150 | 1.3 | 2.3 | 3.8 | 9.1 | 13.3 |
| CYNT + ASM | WG 40 + WG 50 | 100 + 12.5 | 1.8 | 2.1 | 4.0 | 8.4 | 11.3 |
| CYNT + ASM | WG 40 + WG 50 | 150 + 12.5 | 1.4 | 1.8 | 2.3 | 4.0 | 4.9 |
| CYNT + ASM | WG 40 + WG 50 | 100 + 25 | 1.2 | 1.6 | 1.8 | 1.8 | 2.3 |
| CYNT + ASM | WG 40 + WG 50 | 150 + 25 | 0.3 | 0.8 | 1.0 | 1.4 | 2.3 |

## Claims

1. A method of reducing insect-vectored viral infection in a plant by application of a combination of cyantraniliprole (Ib), or an agrochemically acceptable salt thereof, 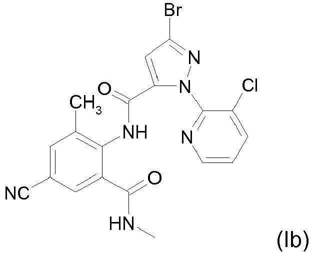 and acibenzolar-S-methyl, in a ratio of 10 to 40 parts cyantraniliprole (Ib) to 1 to 10 parts acibenzolar-S-methyl, by weight, together with an agrochemically acceptable diluent or carrier.

2. A method according to claim 1 wherein the rate of application of the cyantraniliprole (Ib) is 50g to 200g/ha, and the rate of application of acibenzolar-S-methyl is from 5g to 50g/ha.

3. A method according to claim 1 or claim 2 wherein the plant is a crop plant selected from field crops fruits, vegetables, nuts, peanuts, berries, tropical plantations, ornamentals and others, such as wheat, barley, rye, oats, rice, maize, sorghum, beans, lentils, peas, soybeans, rape, mustard, poppy, sugar- and fodder- beet, cotton, flax, hemp, jute, sunflowers, castor oil, groundnuts, potatoes, tobacco, sugar cane, apples, pears, plums, peaches, nectarines, apricots, cherries, oranges, lemons, grapefruit, mandarins, olives vines, hops, almonds, walnuts, hazelnuts, avocado, bananas, tea, coffee, coconut, cocoa, natural rubber plants, oil plants, strawberries, raspberries, blackberries, spinach, lettuce, asparagus, cabbages, Chinese kale, carrots, onions, tomatoes, cucumbers, pepper, eggplants, melons, paprika, chilli, roses, chrysanthemums and carnations.

4. A method according to claim 3 wherein the plant is tomato, tobacco, peanut or barley.

5. A method according to claim 1 or claim 2 wherein the plant is susceptible to damage by viral infections transmitted by whitefly, aphid, leafhopper or thrips.

6. A method according to any one of claims 1 to 5 wherein the cyantraniliprole (Ib) and the acibenzolar-S-methyl are applied simultaneously, separately or sequentially.

7. A plant or plant propagation material treated with and comprising a combination of cyantraniliprole (Ib), or an agrochemically acceptable salt thereof, 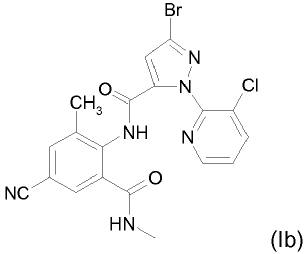 and acibenzolar-S-methyl, in a ratio of 10 to 40 parts cyantraniliprole (Ib) to 1 to 10 parts acibenzolar-S-methyl, by weight, together with an agrochemically acceptable diluent or carrier.

8. A composition comprising cyantraniliprole (Ib), or an agrochemically acceptable salt thereof, 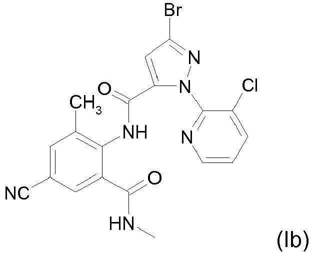 and acibenzolar-S-methyl, in a ratio of 10 to 40 parts cyantraniliprole (Ib) to 1 to 10 parts acibenzolar-S-methyl, by weight, together with an agrochemically acceptable diluent or carrier.

## Patentansprüche

1. Verfahren zum Reduzieren einer von einem Insektenvektor übertragenen Virusinfektion in einer Pflanze durch Anwendung einer Kombination von Cyantraniliprol (Ib) oder einem agrochemisch unbedenklichen Salz davon 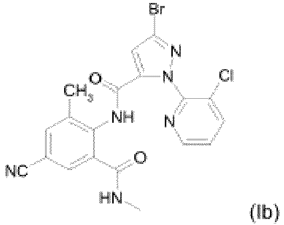 und Acibenzolar-S-methyl in einem Verhältnis von 10 bis 40 Gewichtsteilen Cyantraniliprol (Ib) zu 1 bis 10 Gewichtsteilen Acibenzolar-S-methyl zusammen mit einem agrochemisch unbedenklichen Verdünnungsmittel oder Träger.

2. Verfahren nach Anspruch 1, wobei die Aufwandmenge an Cyantraniliprol (Ib) 50 g bis 200 g/ha und die Aufwandmenge an Acibenzolar-S-methyl 5 g bis 50 g/ha beträgt.

3. Verfahren nach Anspruch 1 oder 2, wobei es sich bei der Pflanze um eine Kulturpflanze ausgewählt aus Ackerkulturfrüchten, Gemüsen, Nüssen, Erdnüssen, Beeren, tropischen Plantagen, Zierpflanzen und anderen wie Weizen, Gerste, Roggen, Hafer, Reis, Mais, Sorghum, Bohnen, Linsen, Erbsen, Sojabohnen, Raps, Senf, Mohn, Zucker- und Futterrübe, Baumwolle, Flachs, Hanf, Jute, Sonnenblumen, Rizinusöl, Erdnüssen, Kartoffeln, Tabak, Zuckerrohr, Äpfeln, Birnen, Pflaumen, Pfirsichen, Nektarinen, Aprikosen, Kirschen, Orangen, Zitronen, Grapefruit, Mandarinen, Oliven, Reben, Hopfen, Mandeln, Walnüssen, Haselnüssen, Avocado, Bananen, Tee, Kaffee, Kokosnuss, Kakao, Gummipflanzen, Ölpflanzen, Erdbeeren, Himbeeren, Brombeeren, Spinat, Salat, Spargel, Kohl, Chinakohl, Karotten, Zwiebeln, Tomaten, Gurken, Pfeffer, Auberginen, Melonen, Paprika, Chili, Rosen, Chrysanthemen und Nelken handelt.

4. Verfahren nach Anspruch 3, wobei es sich bei der Pflanze um Tomate, Tabak, Erdnuss oder Gerste handelt.

5. Verfahren nach Anspruch 1 oder 2, wobei die Pflanze gegenüber einer Schädigung durch durch weiße Fliegen, Blattläuse, Zirkaden oder Thripse übertragenen Virusinfektionen empfindlich ist.

6. Verfahren nach einem der Ansprüche 1 bis 5, wobei das Cyantraniliprol (Ib) und das Acibenzolar-S-methyl gleichzeitig, getrennt oder aufeinanderfolgend angewendet werden.

7. Pflanze oder Pflanzenfortpflanzungsmaterial, welches mit einer Kombination von Cyantraniliprol (Ib) oder einem agrochemisch unbedenklichen Salz davon 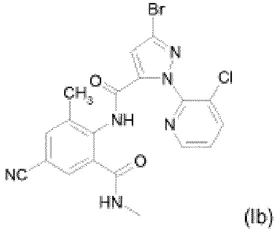 und Acibenzolar-S-methyl in einem Verhältnis von 10 bis 40 Gewichtsteilen Cyantraniliprol (Ib) zu 1 bis 10 Gewichtsteilen Acibenzolar-S-methyl zusammen mit einem agrochemisch unbedenklichen Verdünnungsmittel oder Träger behandelt wurde und eine solche Kombination umfasst.

8. Zusammensetzung, umfassend Cyantraniliprol (Ib) oder ein agrochemisch unbedenkliches Salz davon 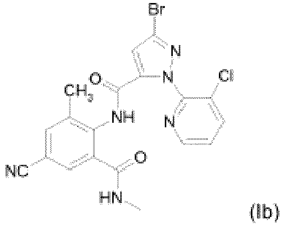 und Acibenzolar-S-methyl in einem Verhältnis von 10 bis 40 Gewichtsteilen Cyantraniliprol (Ib) zu 1 bis 10 Gewichtsteilen Acibenzolar-S-methyl zusammen mit einem agrochemisch unbedenklichen Verdünnungsmittel oder Träger.

## Revendications

1. Procédé de réduction d'une infection virale à vecteur insecte chez une plante par application d'une combinaison de cyantraniliprole (Ib), ou un sel acceptable en agrochimie de celui-ci, 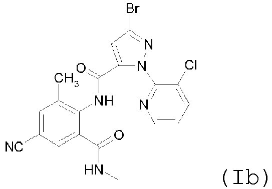 et d'acibenzolar-S-méthyle, dans un rapport de 10 à 40 parties de cyantraniliprole (Ib) à 1 à 10 parties d'acibenzolar-S-méthyle, en poids, conjointement avec un diluant ou un véhicule acceptable en agrochimie.

2. Procédé selon la revendication 1 dans lequel le taux d'application du cyantraniliprole (Ib) est de 50 g à 200 g/ha, et le taux d'application de l'acibenzolar-S-méthyle est de 5 g à 50 g/ha.

3. Procédé selon la revendication 1 ou la revendication 2 dans lequel la plante est une plante cultivée choisie parmi des cultures en champs de fruits, légumes, noix, arachides, baies, plantations tropicales, plantes d'ornement et autres, telles que le blé, l'orge, le seigle, l'avoine, le riz, le maïs, le sorgho, les fèves, les lentilles, les pois, le soja, le colza, la moutarde, le pavot, la betterave sucrière et fourragère, le coton, le lin, le chanvre, la jute, les tournesols, le ricin, les arachides, les pommes de terre, le tabac, la canne à sucre, les pommes, les poires, les prunes, les pèches, les nectarines, les abricots, les cerises, les oranges, les citrons, le pamplemousse, les mandarines, les olives, les vignes, le houblon, les amandes, les noix, les noisettes, l'avocat, les bananes, le thé, le café, la noix de coco, le cacao, les plantes de caoutchouc naturel, les plantes oléagineuses, les fraises, les framboises, les mûres, l'épinard, la laitue, l'asperge, les choux, le chou frisé chinois, les carottes, les oignons, les tomates, les concombres, le poivron, les aubergines, les melons, le paprika, le piment, les roses, les chrysanthèmes et les oeillets.

4. Procédé selon la revendication 3 dans lequel la plante est la tomate, le tabac, l'arachide ou l'orge.

5. Procédé selon la revendications 1 ou la revendication 2 dans lequel la plante est sensible aux dommages causés par des infections virales transmises par les aleurodes, les aphidés, les cicadelles ou les thrips.

6. Procédé selon l'une quelconque des revendications 1 à 5 dans lequel le cyantraniliprole (Ib) et l'acibenzolar-5-méthyle sont appliqués simultanément, séparément ou séquentiellement.

7. Plante ou matériau de propagation de plante traité(e) avec et comprenant une combinaison de cyantraniliprole (Ib), ou un sel acceptable en agrochimie de celui-ci, 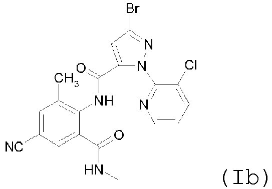 et d'acibenzolar-S-méthyle, dans un rapport de 10 à 40 parties de cyantraniliprole (Ib) à 1 à 10 parties d'acibenzolar-S-méthyle, en poids, conjointement avec un diluant ou un véhicule acceptable en agrochimie.

8. Composition comprenant du cyantraniliprole (Ib), ou un sel acceptable en agrochimie de celui-ci, 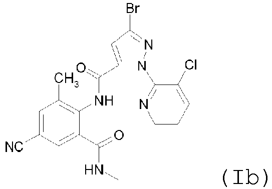 et de l'acibenzolar-S-méthyle, dans un rapport de 10 à 40 parties de cyantraniliprole (Ib) à 1 à 10 parties d'acibenzolar-S-méthyle, en poids, conjointement avec un diluant ou un véhicule acceptable en agrochimie.
